# EUROPEAN PATENT SPECIFICATION

(11) **EP 3 911 973 B1**
(45) Date of publication and mention of the grant of the patent: **18.10.2023**
(21) Application number: 20700673.5
(22) Date of filing: 10.01.2020
(51) Int. Cl.: G01S 13/88, A01D 34/00, A01D 75/18

(54) **IMPROVED LIFT DETECTION FOR A ROBOTIC WORK TOOL**
VERBESSERTE KOLLISIONSDETEKTION FÜR EIN ROBOTERARBEITSWERKZEUG
DÉTECTION DE LEVAGE AMÉLIORÉE POUR UN OUTIL DE TRAVAIL ROBOTIQUE

(30) Priority: 15.01.2019 SE 1950044
(43) Date of publication of application: 24.11.2021
(73) Proprietor: HUSQVARNA AB, 561 82 Huskvarna (SE)
(72) Inventor: ASKENMALM, Kent, 561 34 HUSKVARNA (SE); RANGSJÖ, Jonas, 590 49 LINKÖPING (SE)
(86) International application number: PCT/EP2020/050480
(87) International publication number: WO 2020/148168

(56) References cited:
- WO-A1-2018/174774
- US-A1- 2006 220 606

## Description

### TECHNICAL FIELD

This application relates to robotic work tools and in particular to a system and a method for performing improved lift detection, such as a lawnmower.

### BACKGROUND

Automated or robotic power tools such as robotic lawnmowers are becoming increasingly more popular. In a typical deployment, a work area, such as a garden, is enclosed by a boundary cable with the purpose of keeping the robotic lawnmower inside the work area. The robotic lawnmower is typically configured to work inside the work area during a large portion of the year. As the robotic lawnmower is working outside and will be subjected to weather, dirt, cut grass and other debris, it is important to protect the components of a robotic lawnmower. However, as the safety of the user is paramount all robotic lawnmowers are equipped with lift detection devices that ensures that a lift of the robotic lawnmower is detected within 10 mm lifting height and the cutters may be turned off to prevent or reduce the risk of damage.

Such lift detectors are commonly mechanical or electromechanical devices, where one part is attached to an upper part of the robotic lawnmower and a second part is attached to a lower part of the robotic lawnmower. A lift is detected when the upper part moves in relation to the lower part, i.e. when the first part of the lift detector moves in relation to the second part of the lift detector. The lift detection thus requires that the robotic lawnmower has two cover parts that are movable with regards to one another, which in turn renders the robotic lawnmower susceptible to being contaminated by water, dirt or other debris coming in between the two cover parts and risking to damage or cause increased wear of components of the robotic lawnmower. This is also an expensive solution to implement.

An alternative is to have movable wheels, where one or several wheels "falls" down when the robotic lawnmower is lifted. This is a cheaper solution to implement, but as the solution is oriented on movement of the wheels, and the wheels are being driven through the dirt, cut grass, mud and other debris, the solution is highly sensitive dirt and water.

Thus, there is a need for improved determining of a robotic lawnmower's protection against dirt, water and other debris.

### SUMMARY

As will be disclosed in detail in the detailed description, the inventors have realized that the use of high precision radar devices for determining a distance to the ground or other surface travelled enables robotic work tools to be made with one coherent body. It should be noted that the coherent body part may consist of several parts, such as an outer cover attached to a chassis. However, as the body (or its parts) does not need to be movable relative to itself, as in the body parts are not movable relative each other, the body may be sealed in a more efficient manner . In the case of the body comprising an outer cover and a chassis, the outer cover need not be movable relative the chassis.

It is therefore an object of the teachings of this application to overcome or at least reduce those problems by providing a robotic lawnmower system according to claim 1. Further preferred embodiments are disclosed in dependent claims 2-11.

It is also an object of the teachings of this application to provide a method according to claim 12 for use in a robotic lawnmower system.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic work tool being a robotic lawnmower according to an example embodiment of the teachings herein;
Figure 2 shows an example of a robotic work tool system being a robotic lawnmower system according to an example embodiment of the teachings herein;
Figures 3A, 3B and 3C each shows a schematic view of a robotic work tool being a robotic lawnmower for determining a lift event according to an example embodiment of the teachings herein;
Figures 4A and 4B each shows a schematic view of a robotic work tool being a robotic lawnmower for determining a lift event according to an example embodiment of the teachings herein;
Figure 5A shows an example embodiment of how the radar device 190 determines the reception of an echo according to an example embodiment of the teachings herein;
Figure 5B shows an example illustrating how different echoes from different substrates are received at different times, and at different energy levels according to an example embodiment of the teachings herein;
Figure 6A shows a schematic view of an example embodiment of a robotic work tool, being a robotic lawnmower according to an example embodiment of the teachings herein;
Figure 6B shows an energy-time diagram where the energy content, i.e. signal strength, of the received echoes are shown against the time from transmission of the radar pulse according to an example embodiment of the teachings herein;
Figure 7 shows a corresponding flowchart for a method according to an example embodiment of the teachings herein; and
Figure 8 shows a corresponding flowchart for a method according to an example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools where lift detection is used and where the robotic work tool is susceptible to dust, dirt or other debris.

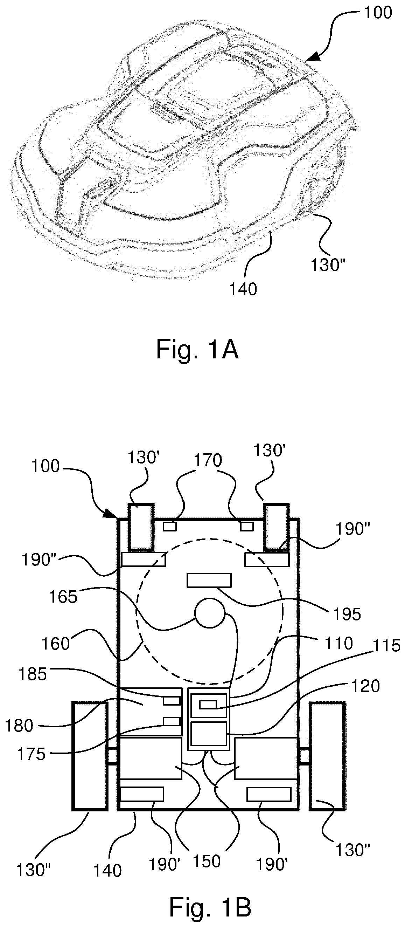

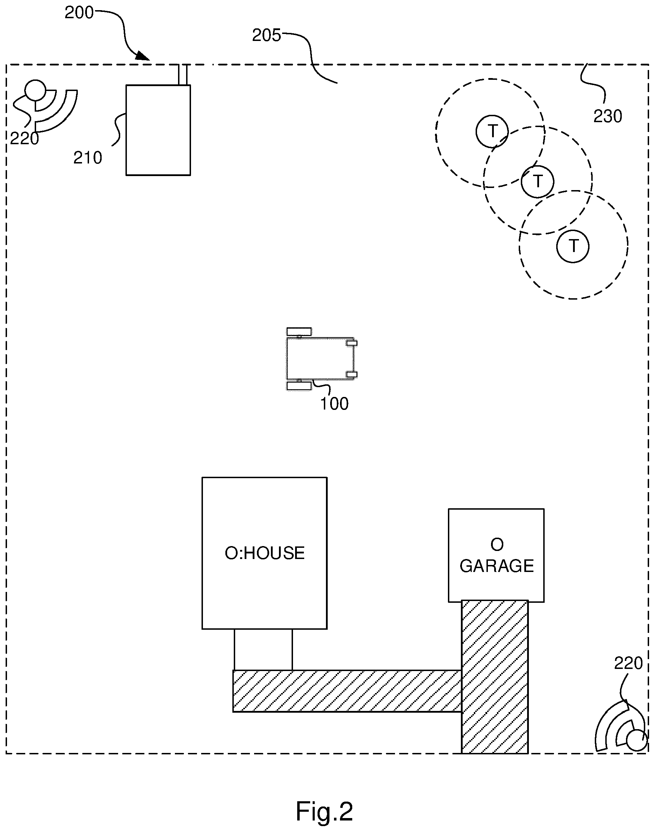

Figure 1A shows a perspective view of a robotic working tool 100, here exemplified by a robotic lawnmower 100, having a body 140 and a plurality of wheels 130 (only one shown). The robotic lawnmower 100 may comprise charging skids for contacting contact plates (not shown in figure 1) when docking into a charging station (not shown in figure 1, but referenced 210 in figure 2) for receiving a charging current through, and possibly also for transferring information by means of electrical communication between the charging station and the robotic lawnmower 100.

Figure 1B shows a schematic overview of the robotic working tool 100, also exemplified here by a robotic lawnmower 100, having a body 140 and a plurality of wheels 130. In the exemplary embodiment of figure 1B the robotic lawnmower 100 has four wheels 130, two front wheels 130' and the rear wheels 130". At least some of the wheels 130 are drivably connected to at least one electric motor 150. It should be noted that even if the description herein is focused on electric motors, combustion engines may alternatively be used, possibly in combination with an electric motor. In the example of figure 1B, each of the rear wheels 130" is connected to a respective electric motor 150. This allows for driving the rear wheels 130" independently of one another which, for example, enables steep turning.

The robotic lawnmower 100 also comprises a grass cutting device 160, such as a rotating blade 160 driven by a cutter motor 165. The grass cutting device being an example of a work tool 160 for a robotic work tool 100. The robotic lawnmower 100 also has (at least) one battery 180 for providing power to the motors 150 and the cutter motor 165.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further be arranged with a wireless communication interface 115 for communicating with other devices, such as a server, a personal computer or smartphone, or the charging station. Examples of such wireless communication devices are Bluetooth^{®}, Global System Mobile (GSM) and LTE (Long Term Evolution), to name a few.

The robotic lawnmower 100 may be further configured to have at least one magnetic sensor 170 arranged to detect a magnetic field (not shown) and for detecting a boundary cable and/or for receiving (and possibly also sending) information from a signal generator (will be discussed with reference to figure 2). In some embodiments, the sensors 170 may be connected to the controller 110, and the controller 110 may be configured to process and evaluate any signals received from the sensors 170. The sensor signals may be caused by the magnetic field being generated by a control signal being transmitted through a boundary cable. This enables the controller 110 to determine whether the robotic lawnmower 100 is close to or crossing a boundary cable, or inside or outside an area enclosed by the boundary cable.

It should be noted that the magnetic sensor(s) 170 as well as the boundary cable (referenced 230 in figure 2) and any signal generator(s) are optional as is indicated by the dashed line of the boundary cable (230) in figure 2. The boundary cable may alternatively be used as the main and only perimeter marker. The boundary cable may alternatively simply be used as an additional safety measure. The boundary cable may alternatively be used as the main perimeter marker and other navigation sensors (see below) are used for more detailed or advanced operation.

The robotic lawnmower 100 may further comprise at least one beacon navigation sensor 175, such as an Ultra Wide Band (UWB) sensor, configured to receive signals from a Radio Frequency beacon, such as a UWB beacon.

The robotic lawnmower 100 may also comprise at least one satellite navigation sensor, such as a Global Positioning System (GPS) device 185, or a GLONASS device.

The robotic lawnmower 100 also comprises at least one radar device 190. In the example of figure 1B there are four radar devices 190', 190". Two 190' are arranged in the vicinity of the front wheels 130' and two are arranged in the vicinity of the rear wheel 130". The radar device 190 may be arranged in font, behind or next to a wheel. It should also be noted that even if the example of figure 1B shows four radar devices 190', 190" each arranged in the vicinity of a wheel, other numbers of radar devices 190 may be possible. In one embodiment one radar device 190 is arranged at the front or the middle of the robotic lawnmower 100. In one embodiment two radar devices 190 are arranged, one at the front and one at the rear of the robotic lawnmower 100.

Radar is a detection system that uses radio waves to determine the range, angle, or velocity of obj ects. The radar operates by transmitting a short radio pulse in a direction. The direction is determined by the directivity of an antenna of the radar device. If there is an obstacle in the direction of the radio pulse, the energy of the radar pulse is scattered in all directions. A portion of the scattered energy is, however, reflected - or echoed - back to the radar. The radar pulse is thereby reflected by the object. The reflected pulse is sometimes referred to as the echo or radar echo. As the radar receives the reflected pulse, a distance to the object can be determined by measuring the time from transmission of the radar pulse to reception of the reflected pulse. This may be done by knowing or noting the time of transmission and determining the time of reception. As the radar pulse travels at the speed of light, the determination of the distance is straight forward knowing both the time t and the speed v by multiplying the speed v with half the time t/2, as the time includes travel in both directions; distance = speed * time/2 = v*t/2.

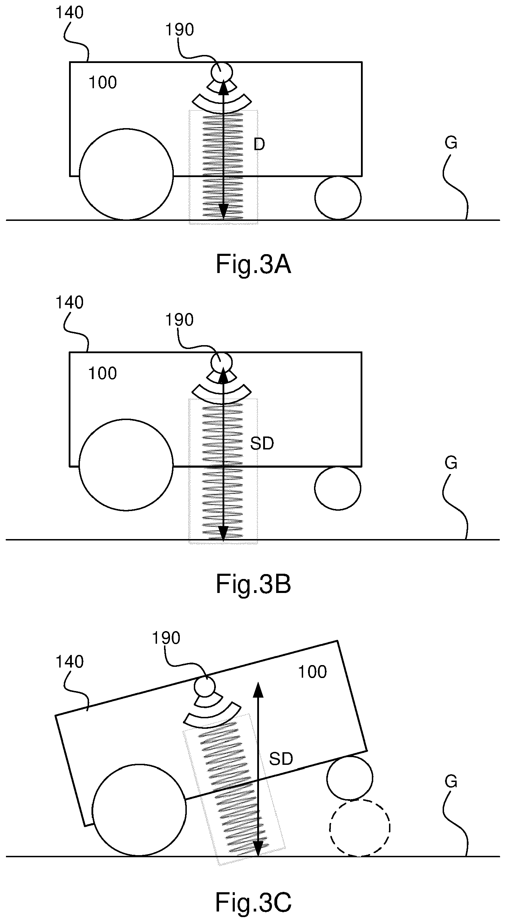

The inventors of the present application has realized that by utilizing a non-contact sensor, such as an acoustic sensor, an optic sensor or a high precision radar device, a sturdy and robust lift detection system may be provided. As a non-contact sensor pulse, such as an acoustic pulse, an optical pulse (when the body is provided with a window) or a radar pulse will be able to penetrate the body 140 of the robotic lawnmower 100 there is no need for the prior art systems where one body part (for example the cover) was arranged movable relative another body part (for example the chassis). The body 140 can thus be constructed to be one coherent piece. Using a coherent body 140 simplifies production and protects the robotic lawnmower from any debris, wet grass, dirt or other debris. The body 140 may still be made from different body parts, but utilizing the teachings herein, the body parts may be sealed in a more efficient manner as they do not need to be movable relative each other any longer. A coherent body is to be understood as a body where the body parts are not movable relative one another, such as where a chassis, provided with the wheels, and an outer cover are sealed and need not be arranged to be movable relative one another. Figure 3A shows the outer cover 140-1 and the chassis 140-2. Together the chassis and the outer cover thus form the outer body inside which most components are carried in the robotic lawnmower, especially components such as the controller and the batteries. In one embodiment, the outer cover is a cover on the outmost side of the robotic lawnmower.

The radar device is one example of a non-contact distance sensor that may be used to detect the distance to the surface travelled. Other examples include optical sensors such as infrared (IR) sensors, Laser or Lidar sensors to mention a few, and acoustic sensors.

Using radar brings about several additional advantages over such optical sensors as there is no need for any openings or lens covered openings through which an infrared or other light signal may be projected through. Using radar brings about benefits over acoustic signals as acoustic signals may be dampened by dirt, grass or other debris stuck to the under carriage of the chassis. This simplifies the placement of the radar device.

The radar device 190 also brings about the advantage over optical distance determining devices, such as LASER, LIDAR or InfraRed in that radar has a relatively wide beam width, or lobe, which enables distance determination even when the robotic lawnmower is tilted. The radar device is also insensitive to any incident light from other light sources. And the radar device cannot be clogged by dirt and other debris.

The radar device 190 is arranged so that it is directed towards the surface travelled, i.e. the ground. The radar device is therefore substantially directed downwards or in other words towards the ground under the robotic lawnmower 100, and not in front, behind or on the side of the robotic lawnmower 100. In one embodiment the radar device 190 is directed within +/- 5 degrees parallel to a normal to the surface travelled (G). In one embodiment the radar device 190 is thus not directed in a direction of travel for the robotic lawnmower 100.

In one embodiment the robotic lawnmower 100 also comprises a tilt detection device, such as an accelerometer or a gyro 195.

Figure 2 shows a schematic view of a robotic working tool system 200 in one embodiment. The schematic view is not to scale. The robotic working tool system 200 comprises a charging station 210 and a robotic working tool 100. As with figures 1A and 1B, the robotic working tool is exemplified by a robotic lawnmower, whereby the robotic work tool system may be a robotic lawnmower system or a system comprising a combinations of robotic work tools, one being a robotic lawnmower, but the teachings herein may also be applied to other robotic working tools adapted to operate within a work area.

The robotic working tool system 220 may also optionally comprise a boundary cable 230 arranged to enclose a work area 205, in which the robotic lawnmower 100 is supposed to serve.

The robotic working tool system 220 may also optionally comprise at least one beacon 220 to enable the robotic lawnmower to navigate the work area using the beacon navigation sensor 175.

Additionally or alternatively, for its operation within the work area 205, in the embodiment of figure 2, the robotic lawnmower 100 may use the satellite navigation device 185, possibly supported by a deduced reckoning navigation sensor (not shown) to navigate the work area 205.

The work area 205 is in this application exemplified as a garden, but can also be other work areas as would be understood. The garden contains a number of obstacles (O), exemplified herein by a house (O:HOUSE) and a garage (O:GARAGE) that are surrounded by a lawn. In front of the garage there is a drive way and a small path leads to the house from the driveway. There are also other obstacles in the garden represented by a number (3) of trees (T). The trees are marked both with respect to their trunks (filled lines) and the extension of their foliage (dashed lines).

Figure 3A shows a schematic view of an example embodiment of a robotic work tool, being a robotic lawnmower 100, according to the teachings herein.

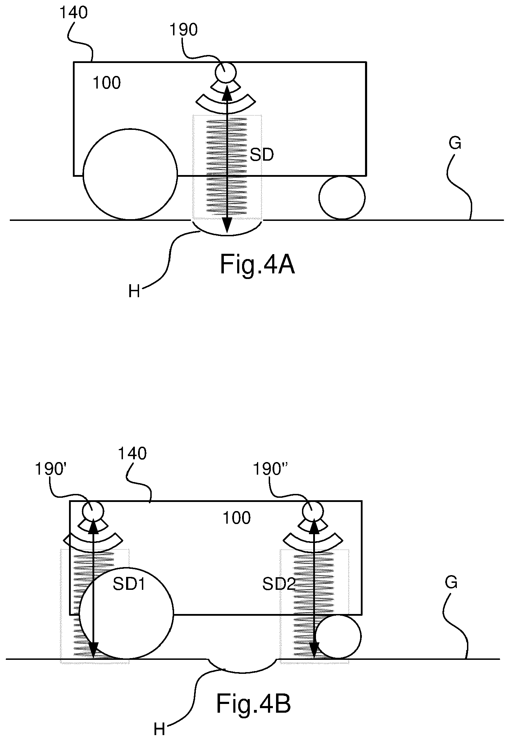

The robotic lawnmower 100 is traversing or travelling over a surface referenced G. For the example of a robotic lawnmower 100, the surface is most likely the ground. A radar device 190 is arranged within the robotic lawnmower 100, the radar device being directed downwards towards the surface travelled. Even though the radar device 190 is shown as being arranged on the upper part or ceiling of the body 140 of the robotic lawnmower 100, it should be noted that this is only for illustrative purposes enabling details to be shown without cluttering smaller areas of the figure. It should also be noted that the example of figure 3A only relates to one radar device 190, but the teachings may also be used for embodiments utilizing or comprising several radar devices. See for example figures 4A and 4B for some details.

In figure 3A, the radar device 190 is at a first distance from the ground G, i.e. the surface travelled. The first distance is referenced D in figure 3A and indicated by the arrow. In this example, the distance D is taken to be a normative distance to the ground. As the ground may be irregular the normative distance D may be an interval of distances, or it may be a determined average distance.

In one embodiment, the normative distance may be determined by the controller upon start-up, in one such embodiment before the robotic lawnmower leaves the charging station.

In one embodiment, the normative distance may be determined by the controller when the controller determines that the robotic lawnmower is travelling over a smooth surface, for example a garden path. The controller may be configured to determine that the surface being travelled is smooth by determining that vibrations are below a threshold level. The vibrations may be measured through the accelerometer 195.

Figure 3B shows a schematic view of an example embodiment of a robotic work tool, being a robotic lawnmower 100, according to the teachings herein. In figure 3B, the robotic lawnmower 100 has been lifted of the ground G. In this situation the robotic lawnmower 100 determines the distance to the ground by determining a sensed distance SD. The robotic lawnmower 100 is configured to determine or measure this sensed distance SD utilizing the radar device 190 by transmitting radar pulses and detecting echoes, or reflected pulses, and based on the time difference, determine the sensed distance SD.

As the sensed distance is determined, the robotic lawnmower is configured to compare the sensed distance to a threshold distance. The threshold distance is based on the normative distance. In one embodiment, threshold distance is the normative distance. In one embodiment, to account for variations and reduce the risk of false lift detections, the threshold distance is the normative distance multiplied by a factor. Examples of the factor are 1.01, 1.02, 1.03, 1.04 and 1.05.

In one embodiment, the threshold value is determined as the normative distance added to a distance specified by a safety standard, for example normative distance + 10 mm. In one such embodiment, to account for inaccuracies, the threshold may be set to a distance shorter than that specified by a safety standard, for example normative distance +8 mm or normative distance + 9 mm. In one embodiment, the distance specified may be reduced by a factor before being added to the normative distance. Examples of such factors are 0.95, 0.9, 0.85, 0.8, 0.75, 0.70, 0.65, 0.6, 0.55 or 0.5.

In one embodiment, the threshold distance is determined based on a rate of change of the sensed distance. If the sensed distance is increasing at a too high rate (i.e. the rate of change is higher than a change threshold) indicating a lift, the threshold distance will be set to a value below the current sensed distance, thereby detecting the lift. In one such embodiment the determination of rate of change is performed in combination with a determination of data received from the accelerometer. In one such embodiment, if the accelerometer data does not indicate a vertical movement of the robotic lawnmower, the rate of change may be caused by a hole or such being traversed and a lift is not detected. The controller is thus configured to determine that in addition to the rate of change for the sensed distance is exceeding a threshold, the accelerometer data also indicates a vertical movement. In one embodiment, the controller is configured to base the change threshold on the accelerometer data, wherein the change threshold is increased if the accelerometer data indicates no vertical movement.

As the threshold distance is based on the normative distance, the threshold distance is also determined over a period of time in embodiments where the normative distance is determined over a period of time.

The determination over time may be performed as an average over several measurements. In one embodiment, the average is a weighted average, favouring current measurements over past measurements.

If the robotic lawnmower 100 determines that the sensed distance exceeds the threshold distance, the robotic lawnmower determines that a lift event has been detected.

Figure 3C shows a schematic view of an example embodiment of a robotic work tool, being a robotic lawnmower 100, according to the teachings herein. In figure 3C, the robotic lawnmower 100 has been partially lifted off the ground G by being tilted. In this situation the robotic lawnmower 100 also determines the distance to the ground by determining a sensed distance SD and compares it to the threshold distance. If the robotic lawnmower 100 determines that the sensed distance exceeds the threshold distance, the robotic lawnmower determines that a lift event has been detected. In one such embodiment, the robotic lawnmower 100 is configured to receive an indication of a tilt angle from the tilt detector 195. In such an embodiment, the threshold distance is also based on the tilt angle, wherein an increase in angle leads to a decrease in threshold distance. This is in order to avoid smaller objects from coming into contact with for example the cutting tools that may be more exposed if the robotic lawnmower 100 is tilted of the ground and not lifted, as a tilt may give a larger distance in one end than another. This may also avoid unnecessary stops, i.e. false lifts, when the robotic lawnmower 100 travels over a rough surface, for example over a stone (indicated by a dashed circle in figure 3C).

In one embodiment, an increase in tilt angle, where the angle is maintained for a time period, such as 5, 10, 15 seconds or longer, the threshold distance is decreased according to the tilt angle. This enables for a more accurate lift detection while the robotic lawnmower 100 is travelling in a slope. As a lift in a slope may not be in the direction of the radar pulse, but in a vertical direction, the distance to the ground will depend on the angle of tilt (=distance lifted*sin(angle of tilt)).

It should be noted that all distances, differences in distances and angles in figures 3A, 3B and 3C have been exaggerated for illustrative purposes.

Figure 4A shows a schematic view of an example embodiment of a robotic work tool, being a robotic lawnmower 100, according to the teachings herein. In the example of figure 4A, the robotic lawnmower 100 is travelling over an uneven surface, as indicated by the hole (referenced H) in the travelled surface, i.e. the ground G. As the robotic lawnmower 100 travels over the hole H, or otherwise uneven surface, the robotic lawnmower 100 may sense a distance SD that exceeds the threshold distance and then detect a false lift event.

To prevent such false lift event detections the robotic lawnmower 100 is in one embodiment configured to determine the sensed distance over a time period. For example by determining an average of the sensed distance for the time period such as by integrating the sensed distance over the time period time or summarizing the sensed distances for a series of echoes and dividing by the number of echoes. In one embodiment, the time period is 0.5 sec, 0.25 sec, 0.2 sec, 0.15 sec, 0.1 sec or 0.05 sec.

As an alternative or in addition, the robotic lawnmower is, in one embodiment configured to prevent such false lift event detections by utilizing more than one radar device 190. As can be seen in figure 4B, the robotic lawnmower 100 is arranged with two radar devices, a front radar device 190' and a rear radar device 190". It should be noted that other numbers of radar devices and arrangements of the radar devices 190 are also possible. One example being shown in figure 1B where four radar devices 190 are arranged. Another example being where three radar devices are arranged, either two at the front and one at the rear, or one at the front and two at the rear. Such arrangements are beneficially used for robotic lawnmowers with three wheels.

Arrangements with more than one radar device 190 are thus configured to provide a plurality of sensed distances, one from each radar device. In the example embodiment of figure 4B, the robotic lawnmower 100 is configured to determine the sensed distance SD to the surface travelled G by determining a first sensed distance SD1 utilizing the front or first radar device 190'. The robotic lawnmower is also configured to determine a second sensed distance SD2 utilizing the rear or second radar device 190". The robotic lawnmower 100 is configured to determine the sensed distance SD based on the first sensed distance SD1 and the second sensed distance SD2.

In one embodiment, the robotic lawnmower 100 is configured to determine if a lift event is detected by comparing each sensed distance SD to the surface travelled G to each a threshold distance. Several situations may apply.

If two sensed distances on a same side (front side, rear side, left side, right side) of the robotic lawnmower exceeds the threshold distance, a lift event is detected. As an additional test, the robotic lawnmower 100 is configured to determine that the lift event is detected, if also the radar devices on the opposite side provide sensed distances that have become shorter than the normative distance, i.e. falling below a second threshold. Which indicates that the robotic lawnmower is being tilted to one side.

If only one sensed distance exceeds the threshold distance, a lift event is not detected.

If only sensed distances for radar devices arranged at diagonally opposite corners exceed the threshold distance, a lift event is not detected.

In one embodiment, the sensed distance is determined as the average of the plurality of sensed distances, in the example of figure 4B, the average of the first and the second sensed distance. This enables for reducing the effect of uneven surfaces.

In one embodiment, the sensed distance is determined to be the minimum of the plurality of sensed distances. In the example of figure 4B, the lower of the first and the second sensed distances. This enables for reducing the risk of a false lift event.

Returning to the functionality of the radar device 190. As the emitted or transmitted radar pulse is intercepted by an object or surface, from here on a substrate, a portion of the energy of the radar pulse will be reflected in every direction, including the direction back to the radar device. The reflected pulse or echo will thus be received after a time t. As has been discussed in the above, this time corresponds to double the distance travelled. As most substrates that reflect the pulse or give rise to an echo are irregular, the echo will in most cases not be a short pulse, but rather an extended wave form.

To reduce the power, both electrical and processing power, required or consumed by the radar device, the radar device 190 is, in one embodiment, configured to determine if a pulse has been received at given times or time intervals. The times (or time intervals) correspond to expected distances to substrates. By only performing the pulse reception analysis at given times, the processing power can be reduced significantly.

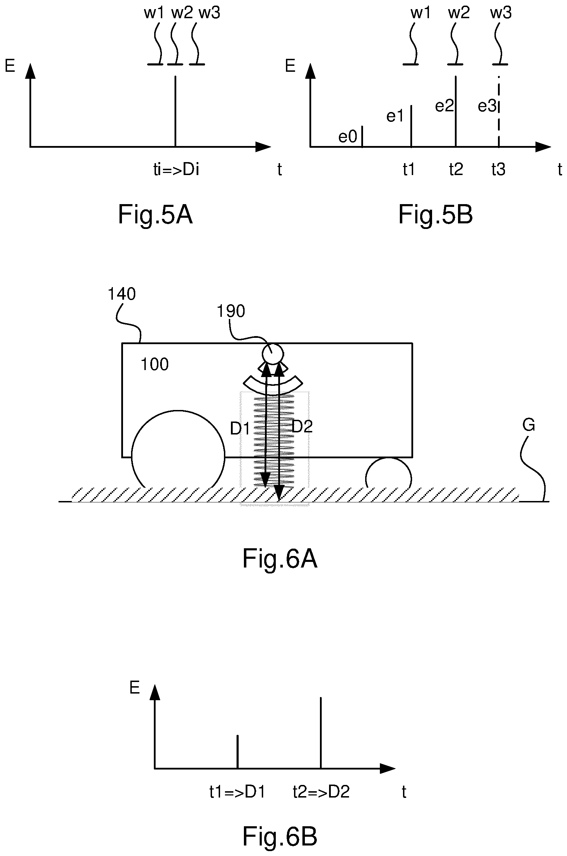

Figure 5A shows an example embodiment of how the radar device 190 determines the reception of an echo. Figure 5A shows a graph illustrating the received energy E over time t. Three time windows w1, w2 and w3 are also illustrated. As discussed above, the radar device 190 is, in one embodiment, configured to determine that an echo has been received within at least one time window w1, w2, w3. The different time windows correspond to expected distances that an echo could be expected to be reflected from. As also discussed above, the time of reception ti corresponds to a distance Di. One example of a distance Di that an echo is expected to be received from is the normative distance. In figure 5A this would correspond to the time window w2. Another example of a distance Di that an echo is expected to be received from is a series of distances around the threshold distance, or from the normative distance to the threshold distance, possibly going beyond the threshold distance. In figure 5A this would correspond to the time window w3.

Another distance that an echo could be expected to be received from is the height of the grass being cut (or other substrate being serviced). In figure 5A this would correspond to the time window w1.

To determine which time windows to be used, the robotic lawnmower 100 is configured to calibrate the radar device by receiving pulses in wider or more time windows and determine over time the most likely or rather most frequently times where an echo is received. The time window(s) can then be set to be closer to or narrower around the expected times.

In order for allowing for shifts of distances, such as when changing surfaces or when changing cutting heights, the robotic lawnmower 100 is configured in one embodiment, to repeatedly calibrate the time windows to accommodate any shifts. For shifts occurring slowly, the robotic lawnmower 100 may be configured to move a time window if it is determined that the expected echo is received closer to an edge of the time window, whereby the time window is moved so that the echo is received in a center area of the time window. For shifts occurring suddenly, the robotic lawnmower 100 may be configured to expand a time window or introduce more time windows around the time window if it is determined that an expected echo is not received. Especially if the echo is not received for a given number of times to allow for various errors and irregularities. The expanded or added time window(s) will then enable the robotic lawnmower 100 to recalibrate the time window(s) to the new expected time position of the expected echo.

This allows the robotic lawnmower 100 to continuously or repeatedly calibrate the normative distance, the threshold distance and any other distance that is to be monitored (such as the grass height).

The robotic lawnmower 100 may also be calibrated in how often and for how long to calibrate the time windows. For a surface with many irregularities the normative distance may vary greatly and a more frequent calibration may be needed. Likewise a longer time window over which the normative distance is determined may be required. For smooth surfaces, a less frequent calibration will be needed. Likewise a shorter time window over which the normative distance is determined may be required.

As mentioned above, a portion of a radar pulse is reflected upon intercepting a substrate. How large this portion is depends on a number of factors such as the density and composition of the substrate. Different substrates will thus give rise to echoes having different energy content, i.e. they will be of different strength or amplitude.

Figure 5B shows an example illustrating how different echoes from different substrates are received at different times, and at different energy levels. In figure 5B three external pulses are shown to be received in each a time window, a first echo e1 is received in a first time window w1, a second echo e2 is received in a second time window and a third echo e3 is possibly received in a third time window (as indicated by the dashed line). The first echo may correspond to the grass height, which will be more or less constant for a garden before being serviced, and at another constant level after having been serviced. The second echo e2 corresponds to the normative distance. And the third echo e3 may correspond to a distance exceeding the threshold thereby indicating a lift event.

Also shown is an echo e0 without a corresponding time window. Such an echo may be the result of internal structures, such as the reflection from the body 140 of the robotic lawnmower 100 (or even from dirt or debris stuck to the underside of the body). Through the use of time windows such echoes may be filtered out or ignored by not assigning a time window to its expected location. In the example of figure 5B, showing four known echoes, this would entail a saving in processing power of 25%. It will also render the radar device less susceptible to noise and other interferences.

As the radar device will receive an echo from each substrate that causes a reflection, the radar device 190 may be utilized to determine the height of the grass. As the ground will provide a stronger echo, i.e. a reflected pulse having a higher energy content or signal strength, than for example grass, utilizing the radar device 190 enables the robotic lawnmower 100 to also determine the height of the grass.

Figure 6A shows a schematic view of an example embodiment of a robotic work tool, being a robotic lawnmower 100, according to the teachings herein. In the example of figure 6A, the robotic lawnmower 100 is travelling over a surface covered with grass. As can be seen from figure 6A the radar device 190 receives two echoes, one from the grass layer and one from the ground G. It could be noted that the radar device 190 will also receive an echo from the body of the robotic lawnmower 100, which echo may be ignored.

In one embodiment, the robotic lawnmower 100 is configured to determine that the first external echo (as differentiated from internal echoes, being any echoes originating from inside the robotic lawnmower 100) indicates the level of the grass layer, and that the second echo indicates the ground level. The first distance, being determined based on the first echo, thus represent the distance to the grass layer and the second distance, being determined based on the second echo, thus represent the distance to the ground level.

Figure 6B shows an energy-time diagram where the energy content, i.e. signal strength, of the received echoes are shown against the time from transmission of the radar pulse.

In one embodiment, the robotic lawnmower 100 is configured to determine that the external echo (as differentiated from internal echoes, being any echoes originating from inside the robotic lawnmower 100) having the lowest energy content indicates the level of the grass layer, and that the echo having the highest energy content indicates the ground level.

The first distance, being determined based on the echo with the lowest energy content, thus represent the distance to the grass layer and the second distance, being determined based on the echo with the highest energy content, thus represent the distance to the ground level.

In one embodiment, the robotic lawnmower 100 is configured to determine that the external echo (as differentiated from internal echoes, being any echoes originating from inside the robotic lawnmower 100) having an energy content corresponding to a reflection from grass indicates the level of the grass layer, and that the echo having an energy content corresponding to a reflection from the ground level indicates the ground level.

The grass height may be determined as the difference between the first distance and the second distance, or alternatively as the difference between the normative distance and the first distance.

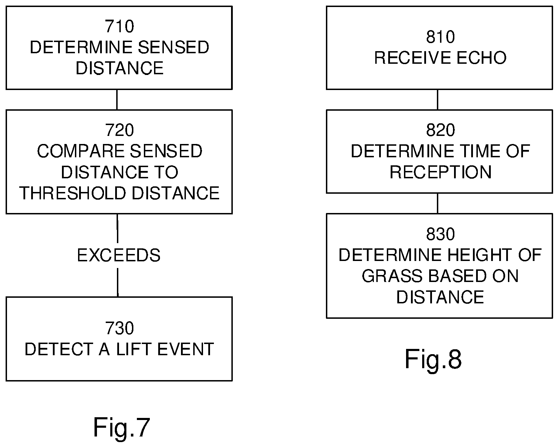

Figure 7 shows a flowchart of a general method according to the teachings herein. The robotic lawnmower 100 determines 710 a sensed distance (SD) to a surface travelled (G) utilizing the at least one radar device (190, 190', 190"). The robotic lawnmower 100 then determines 720 whether the sensed distance is greater than a threshold distance; and if so detects 730 a lift event.

As has been discussed above, the robotic lawnmower 100 is configured to determine the height of the grass by utilizing the radar device 190.

Figure 8 shows a flowchart of a general method according to the teachings herein

In an embodiment where there is more than one radar device 190', 190", and where at least one radar device 190' is arranged in front of (with regards to the direction of travel) the cutting tool 160, and one radar device 190" is arranged behind (with regards to the direction of travel) the cutting tool 160, the radar devices 190 may also be utilized to determine an effectiveness of the grass cutting by comparing the distance to the cut grass (grass behind cutter) with the distance to the uncut grass (grass in front of cutter). Even if this is not an exact measurement, it provides an indication of the effectiveness of the grass cutting and may enable for a better scheduling of the operation of the robotic lawnmower 100.

The cutting tool 160 may also be adapted based on the detected height of grass. For example, the cutting height of the cutting tool may be adapted. Another example is adapting the power delivered to the cutting tool.

The same methodology may also be applied to other robotic services where the surface travelled provides a different radar echo (either in time received, strength or both) before and after having been serviced.

## Claims

1. A robotic lawnmower system (200) comprising a robotic lawnmower (100) comprising at least one distance sensor (190), wherein the
distance sensor (190) comprises a radar device (190, 190', 190"), the robotic lawnmower (100) being configured to
determine a sensed distance (SD) to a surface travelled (G) utilizing the at least one radar device (190, 190', 190");
determine whether the sensed distance is greater than a threshold distance; and if so
detect a lift event.

2. The robotic lawnmower system according to claim 1, wherein the radar device is directed at the surface travelled (G).

3. The robotic lawnmower system according to any preceding claim,
wherein the body (140) of the robotic lawnmower is a coherent body (140) comprising a chassis (140-2) and an outer cover (140-1) which chassis (140-2) and outer cover (140-1) are arranged to not be movable relative one another.

4. The robotic lawnmower system according to any preceding claim,
wherein the robotic lawnmower is further configured to determine the threshold distance over a time period.

5. The robotic lawnmower system according to any preceding claim,
wherein the robotic lawnmower (100) comprises a first distance sensor (190') and a second distance sensor (190"), wherein the controller (110) is further configured to determine the sensed distance (SD) to the surface travelled (G) by:
determining a first sensed distance (SD1) utilizing the first distance sensor (190');
determining a second sensed distance (SD2) utilizing the second distance sensor (190"); and
determining the sensed distance (SD) based on the first sensed distance (SD1) and the second sensed distance (SD2).

6. The robotic lawnmower system according to claim 5, wherein the first distance sensor is a first radar device (190') and the distance sensor is a second radar device (190"), and wherein the controller (110) is further configured to:
determine the first sensed distance (SD1) utilizing the first radar device (190');
determine the second sensed distance (SD2) utilizing the second radar device (190"); and
determining the sensed distance (SD) based on the first sensed distance (SD1) and the second sensed distance (SD2).

7. The robotic lawnmower system according to any preceding claim,
wherein the robotic lawnmower is further configured to receive a radar echo within a time window (w1, w2, w3).

8. The robotic lawnmower system according to claim 7, wherein the robotic lawnmower is further configured to recalibrate at least on time window (w1, w2, w3).

9. The robotic lawnmower system according to any of claims 1 to 8,
wherein the robotic lawnmower is further configured to determine the energy content of a received radar echo and determine a reflection substrate based on the determined energy content of the received radar echo.

10. The robotic lawnmower system according to any of claims 1 to 9,
wherein the robotic lawnmower is further configured to determine a distance to a reflection substrate based on the time of reception of a received radar echo.

11. The robotic lawnmower system according to claim 10, wherein the robotic lawnmower is further configured to determine the height of grass based on the time of reception of a received radar echo.

12. A method for use in a robotic lawnmower system (200) comprising a robotic lawnmower (100) comprising a distance sensor (190), wherein the distance sensor is a radar device (190. 190', 190"), the method comprising:
determining a sensed distance (SD) to a surface travelled (G) ) utilizing the at least one radar device (190, 190', 190");
determining whether the sensed distance is greater than a threshold distance; and if so
detecting a lift event.

## Patentansprüche

1. Roboterrasenmähersystem (200), umfassend einen Roboterrasenmäher (100), umfassend mindestens einen Abstandssensor (190), wobei der Abstandssensor (190) eine Radarvorrichtung (190, 190', 190") umfasst, wobei der Roboterrasenmäher (100) für Folgendes konfiguriert ist:
Bestimmen eines erfassten Abstands (SD) zu einer befahrenen Oberfläche (G) unter Nutzung der mindestens einen Radarvorrichtung (190, 190', 190");
Bestimmen, ob der erfasste Abstand größer als ein Schwellenwertabstand ist; und, falls ja,
Erkennen eines Hebeereignisses.

2. Roboterrasenmähersystem nach Anspruch 1, wobei die Radarvorrichtung auf die befahrene Oberfläche (G) gerichtet ist.

3. Roboterrasenmähersystem nach einem vorhergehenden Anspruch, wobei der Körper (140) des Roboterrasenmähers ein in sich geschlossener Körper (140) ist, der ein Chassis (140-2) und eine äußere Abdeckung (140-1) umfasst, wobei das Chassis (140-2) und die äußere Abdeckung (140-1) so angeordnet sind, dass sie relativ zueinander nicht beweglich sind.

4. Roboterrasenmähersystem nach einem vorhergehenden Anspruch, wobei der Roboterrasenmäher ferner konfiguriert ist, um den Schwellenwertabstand während eines Zeitabschnitts zu bestimmen.

5. Roboterrasenmähersystem nach einem vorhergehenden Anspruch, wobei der Roboterrasenmäher (100) einen ersten Abstandssensor (190') und einen zweiten Abstandssensor (190") umfasst, wobei die Steuerung (110) ferner konfiguriert ist, um den erfassten Abstand (SD) zu der befahrenen Oberfläche (G) durch Folgendes zu bestimmen:
Bestimmen eines ersten erfassten Abstands (SD1) unter Nutzung des ersten Abstandssensors (190');
Bestimmen eines zweiten erfassten Abstands (SD2) unter Nutzung des zweiten Abstandssensors (190''); und
Bestimmen des erfassten Abstands (SD) basierend auf dem ersten erfassten Abstand (SD1) und dem zweiten erfassten Abstand (SD2).

6. Roboterrasenmähersystem nach Anspruch 5, wobei der erste Abstandssensor eine erste Radarvorrichtung (190') ist und der Abstandssensor eine zweite Radarvorrichtung (190") ist und wobei die Steuerung (110) ferner für Folgendes konfiguriert ist:
Bestimmen des ersten erfassten Abstands (SD1) unter Nutzung der ersten Radarvorrichtung (190');
Bestimmen des zweiten erfassten Abstands (SD2) unter Nutzung der zweiten Radarvorrichtung (190''); und
Bestimmen des erfassten Abstands (SD) basierend auf dem ersten erfassten Abstand (SD1) und dem zweiten erfassten Abstand (SD2).

7. Roboterrasenmähersystem nach einem vorhergehenden Anspruch, wobei der Roboterrasenmäher ferner konfiguriert ist, um ein Radarecho innerhalb eines Zeitfensters (w1, w2, w3) zu empfangen.

8. Roboterrasenmähersystem nach Anspruch 7, wobei der Roboterrasenmäher ferner konfiguriert ist, um mindestens auf Zeitfenster (w1, w2, w3) zu rekalibrieren.

9. Roboterrasenmähersystem nach einem der Ansprüche 1 bis 8, wobei der Roboterrasenmäher ferner konfiguriert ist, um den Energieinhalt eines empfangenen Radarechos zu bestimmen und ein Reflexionssubstrat basierend auf dem bestimmten Energieinhalt des empfangenen Radarechos zu bestimmen.

10. Roboterrasenmähersystem nach einem der Ansprüche 1 bis 9, wobei der Roboterrasenmäher ferner konfiguriert ist, um einen Abstand zu einem Reflexionssubstrat basierend auf der Zeit des Empfangs eines empfangenen Radarechos zu bestimmen.

11. Roboterrasenmähersystem nach Anspruch 10, wobei der Roboterrasenmäher ferner konfiguriert ist, um die Höhe von Gras basierend auf der Zeit des Empfangs eines empfangenen Radarechos zu bestimmen.

12. Verfahren zur Verwendung in einem Roboterrasenmähersystem (200), umfassend einen Roboterrasenmäher (100), umfassend einen Abstandssensor (190), wobei der Abstandssensor eine Radarvorrichtung (190, 190', 190") ist, wobei das Verfahren Folgendes umfasst:
Bestimmen eines erfassten Abstands (SD) zu einer befahrenen Oberfläche (G) unter Nutzung der mindestens einen Radarvorrichtung (190, 190', 190");
Bestimmen, ob der erfasste Abstand größer als ein Schwellenwertabstand ist; und, falls ja,
Erkennen eines Hebeereignisses.

## Revendications

1. Système (200) de tondeuse à gazon robotique comportant une tondeuse (100) à gazon robotique comportant au moins un capteur (190) de distance,
le capteur (190) de distance comportant un dispositif (190, 190', 190") à radar, la tondeuse (100) à gazon robotique étant configurée pour
déterminer une distance détectée (SD) à une surface parcourue (G) en utilisant le ou les dispositifs (190, 190', 190") à radar ;
déterminer si la distance détectée est supérieure à une distance seuil ; et si c'est le cas,
détecter un événement de soulèvement.

2. Système de tondeuse à gazon robotique selon la revendication 1, le dispositif à radar étant dirigé vers la surface parcourue (G).

3. Système de tondeuse à gazon robotique selon l'une quelconque des revendications précédentes, le corps (140) de la tondeuse à gazon robotique étant un corps cohérent (140) comportant un châssis (140-2) et un couvercle extérieur (140-1), ledit châssis (140-2) et ledit couvercle extérieur (140-1) étant disposés pour ne pas être mobiles l'un par rapport à l'autre.

4. Système de tondeuse à gazon robotique selon l'une quelconque des revendications précédentes, la tondeuse à gazon robotique étant en outre configurée pour déterminer la distance seuil sur une période.

5. Système de tondeuse à gazon robotique selon l'une quelconque des revendications précédentes, la tondeuse (100) à gazon robotique comportant un premier capteur (190') de distance et un second capteur (190") de distance, le moyen (110) de commande étant en outre configuré pour déterminer la distance détectée (SD) à la surface parcourue (G) :
en déterminant une première distance détectée (SD1) à l'aide du premier capteur (190') de distance ;
en déterminant une seconde distance détectée (SD2) à l'aide du second capteur (190") de distance ; et
en déterminant la distance détectée (SD) d'après la première distance détectée (SD1) et la seconde distance détectée (SD2).

6. Système de tondeuse à gazon robotique selon la revendication 5, le premier capteur de distance étant un premier dispositif (190') à radar et le capteur de distance étant un second dispositif (190") à radar, et le moyen (110) de commande étant en outre configuré pour :
déterminer la première distance détectée (SD1) à l'aide du premier dispositif (190') à radar ;
déterminer la seconde distance détectée (SD2) à l'aide du second dispositif (190") à radar ; et
déterminer la distance détectée (SD) d'après la première distance détectée (SD1) et la seconde distance détectée (SD2).

7. Système de tondeuse à gazon robotique selon l'une quelconque des revendications précédentes, la tondeuse à gazon robotique étant en outre configurée pour recevoir un écho radar au cours d'une fenêtre temporelle (w1, w2, w3).

8. Système de tondeuse à gazon robotique selon la revendication 7, la tondeuse à gazon robotique étant en outre configurée pour réétalonner au moins sur fenêtre temporelle (w1, w2, w3).

9. Système de tondeuse à gazon robotique selon l'une quelconque des revendications 1 à 8, la tondeuse à gazon robotique étant en outre configurée pour déterminer l'énergie contenue dans un écho radar reçu et déterminer un substrat de réflexion d'après l'énergie déterminée contenue dans l'écho radar reçu.

10. Système de tondeuse à gazon robotique selon l'une quelconque des revendications 1 à 9, la tondeuse à gazon robotique étant en outre configurée pour déterminer une distance à un substrat de réflexion d'après l'instant de réception d'un écho radar reçu.

11. Système de tondeuse à gazon robotique selon la revendication 10, la tondeuse à gazon robotique étant en outre configurée pour déterminer la hauteur de l'herbe d'après l'instant de réception d'un écho radar reçu.

12. Procédé destiné à être utilisé dans un système (200) de tondeuse à gazon robotique comportant une tondeuse (100) à gazon robotique comportant un capteur (190) de distance, le capteur de distance étant un dispositif (190, 190', 190") à radar, le procédé comportant les étapes consistant à :
déterminer une distance détectée (SD) à une surface parcourue (G) en utilisant le ou les dispositifs (190, 190', 190") à radar :
déterminer si la distance détectée est supérieure à une distance seuil ; et si c'est le cas,
détecter un événement de soulèvement.
